# EUROPEAN PATENT SPECIFICATION

(11) **EP 2 007 621 B1**
(45) Date of publication and mention of the grant of the patent: **25.11.2009**
(21) Application number: 07734041.2
(22) Date of filing: 21.03.2007
(51) Int. Cl.: B64C 1/14, E05C 3/00, E05C 9/18, E05B 17/00

(54) **LOCKING SYSTEM FOR AN AIRCRAFT DOOR, ESPECIALLY FOR AN AIRPLANE PASSENGER DOOR**
VERRIEGELUNGSSYSTEM FÜR EINE LUFTFAHRZEUGTÜR, INSBESONDERE FÜR EINE FLUGZEUGPASSAGIERTÜR
SYSTEME DE VERROUILLAGE POUR PORTE D'AERONEF, EN PARTICULIER POUR PORTE DE PASSAGER D'AERONEF

(30) Priority: 22.03.2006 US 784455 P; 23.03.2006 FR 0602516
(43) Date of publication of application: 31.12.2008
(73) Proprietor: LATECOERE, 31500 Toulouse (FR)
(72) Inventor: DE RESSEGUIER, Joël, F-31400 Toulouse (FR); LAMAT, Patrick, F-31180 Lapeyrouse Fossat (FR); TEXCIER, Roland, F-31850 Montrabe (FR)
(74) Representative: Junca, Eric
(86) International application number: PCT/IB2007/000706
(87) International publication number: WO 2007/107861

(56) References cited:
- WO-A-84/00786
- DE-C- 668 369
- DE-U1- 20 122 036
- GB-A- 1 452 334
- GB-A- 2 210 098

## Description

The present invention relates to a locking system for an aircraft door, especially for an airplane passenger door.

An "inward opening" plug-type airplane passenger door comprises discrete fixed stops that engage, in the closed position, with corresponding discrete stops located on the frame structure defining the bearing surfaces for this door. The reciprocal engagement of these stops on the door with the stops on the doorframe ensures that the door is properly closed so as to withstand the stresses undergone by it during flight, especially those exerted by the cabin pressurization.

This type of door has, once the various safety mechanisms have been initiated, a three-phase opening sequence:
- first phase: disengagement of the door relative to its seat in a movement directed toward the interior of the cabin (usually called "inward opening" movement), the purpose of which is to decouple the stops on the door from the stops on the doorframe. This movement is possible only in the absence of pressurization, whether residual or full, in the airplane cabin, given that it will counter the force exerted on the door by such pressurization, and consequently constitutes an important safety factor;
- second phase: movement of the door upward or downward, the purpose of which is to completely disengage the stops on the door from the stops on the doorframe. This movement means that the doorframe has to be greater in height than the door so that the latter does not butt against the doorframe, the difference in height generally being filled by a flexible flap mounted on the door; and
- third phase: actual opening of the door toward the outside, parallel to the fuselage, performed by means of an angled door arm that imposes a rotation sequence.

This type of movement, although it ensures greater safety, has however the consequence of being complex and of involving the use of expensive and heavy parts such as guide ramps, a mechanism for compensating for the weight of the door, vertical articulations on the arm, levers with rollers or cam wheels, etc.

WO84/00786 A and GB-A-1 452 334 disclose prior art doors wherein the first and second phases are performed by rollers running in guide tracks.

The main objective of the present invention is to propose an aircraft door with a door frame and a locking system that allows this essential drawback to be remedied.

DE 201 22 036U1, GB-A-2 210 098 and DE 668 369 C discloses various prior art locking systems.

Another objective of the invention is to propose a system allowing better distribution of the stresses exerted during flight on the door and the doorframe.

According to the invention, the aircraft door with a doorframe and a locking system system comprises:
- at least one locking member mounted on the door or on the doorframe, located along at least one of the edges of the door or of the doorframe, this locking member being able to move between a closed position, in which it bears against a corresponding bearing region of the doorframe or of the door, a what is called "inward opening" intermediate position, which it occupies during the opening sequence of the door, in which it bears respectively against the doorframe or the door so as to move the door toward the interior of the aircraft cabin, and an open position, in which it is completely disengaged from said corresponding bearing region, thus permitting the outward movement of the door relative to the doorframe without an upward or downward vertical movement;
- means for actuating each locking member between said closed and open positions; and
- means for locking each locking member in the closed position.

In the open position, the locking member is completely disengaged from said corresponding region and therefore does not form an obstacle to movement of the door relative to the doorframe, so that this movement can be relatively simple, eliminating the need for expensive and heavy parts such as those mentioned above. In addition, this movement may exclude an upward or downward movement of the door, and thus may dispense with the need to provide a flexible flap mounted on the door.

Preferably, each locking member is able to move in a pivoting movement and, in said closed position, is approximately parallel to the door or the doorframe, whereas, in the open position, it is approximately perpendicular to the door or to the doorframe.

This pivoting mobility allows each locking member to be securely mounted on the door or on the doorframe.

The door or the doorframe preferably comprises several locking members, preferably on several of its edges, in particular on opposed edges.

This plurality of locking members makes it possible, unlike the discrete stops according to the prior art, to distribute the stresses, undergone by the door or the doorframe during flight, over larger areas.

For the same purpose, each locking member has a relatively long length so as to extend over a substantial portion of an edge of the door or of the doorframe. For example, in this case, the length of each locking member is slightly less than one third of the height of the longitudinal edges of the door or of the doorframe and each longitudinal edge of the door or of the doorframe comprises three successive locking members.

Preferably, the means for locking each pivoting locking member comprise:
- at least one extension of each locking member beyond the pivot axis of this locking member, on the opposite side to the part of the locking member which is intended to cooperate with said corresponding bearing region; and
- at least one latch that can move between a locking position, in which it is engaged between this extension and a region of the door or of the doorframe, and an unlocking position, in which it is set back, beyond said extension, thus permitting the movement of the locking member.

The locking member is thus held perfectly in place in the closed position, the stress on the latch increasing as the stresses exerted on the door by the cabin pressurization increase.

Preferably, at least one pivoting locking member and the means for actuating this locking member comprise means suitable for making each locking member pivot beyond the closed position of this locking member, this pivoting movement bringing each locking member into said inward-opening intermediate position.

According to a preferred embodiment of the invention in this case, when the system includes at least one latch as mentioned above:
- each latch comprises a link rod mounted so as to pivot on the door or the doorframe and, when in the locking position, to bear against said extension; and
- at least one cam surface provided on said extension, shaped so as to allow said additional pivoting to be performed when the link rod moves along said cam surface.

Advantageously, the system includes an actuating arm connected to said latch, allowing it to be actuated between said locking and unlocking positions, which arm, after having moved the latch toward its unlocking position, bears against said extension of the locking member and allows said locking member to move toward its open position.

This actuating arm thus forms, simultaneously, a means for the locking/unlocking actuation of the locking member and for actuating the movement of the locking member.

Advantageously, the doorframe of the door includes at least one angle section, the base leg of which forms said corresponding bearing surface and the free leg of which forms a rim on which a seal, which this door has, is deformed when the door is in the closed position.

The invention will be clearly understood, and other features and advantages thereof will become apparent, with reference to the appended schematic drawing which shows, by way of nonlimiting example, a preferred embodiment of the locking system to which the invention relates:
- figure 1 is a perspective view of an aircraft door and the doorframe for this door, which are equipped with this locking system, which is in the locking position;
- figure 2 is a view similar to figure 1, the system being in the unlocking position;
- figure 3 is a partial view of the door, the doorframe and the locking system, on an enlarged scale, in the locking position;
- figure 4 is a view similar to figure 3, during the inward-opening phase of unlocking the system; and
- figure 5 is a view similar to figure 3 during a subsequent phase in the unlocking sequence of the system.

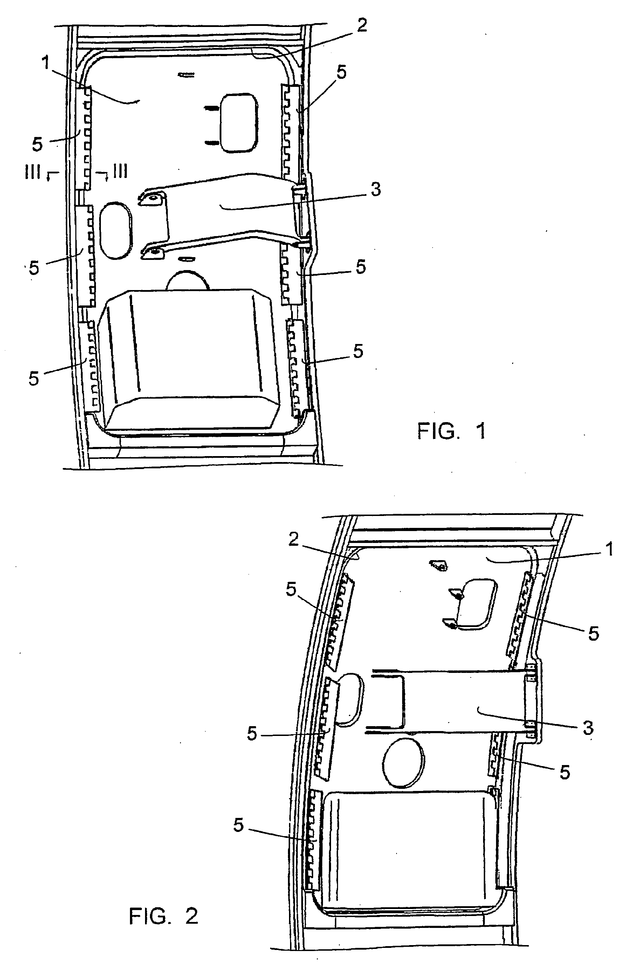

Figures 1 and 2 show an aircraft door 1 and the doorframe 2 for this door 1. In the example shown, the door 1 is a door allowing passengers to enter or leave an airplane.

The door 1 and the doorframe 2 are, as regards their general structure, of conventional type, which it is therefore unnecessary to describe in detail. The door 1 is pivotally connected to an arm 3 which is itself pivotally connected to the doorframe 2, this arm 3 making it possible for the door 1 to be set back away from the airplane cabin, so as to free the bay bounded by the doorframe 2.

Each longitudinal edge of the door 1 is provided with a series of three successive pivoting flaps 5 mounted on the door 1. These flaps 5 can pivot between a closed position shown in figure 1, in which they are approximately parallel to the door 1 and bear against a corresponding bearing region of the doorframe 2, and an open position shown in figure 2, in which they are approximately perpendicular to the door 1 and completely disengaged from said corresponding bearing region, thus permitting the door 1 to move relative to the doorframe 2.

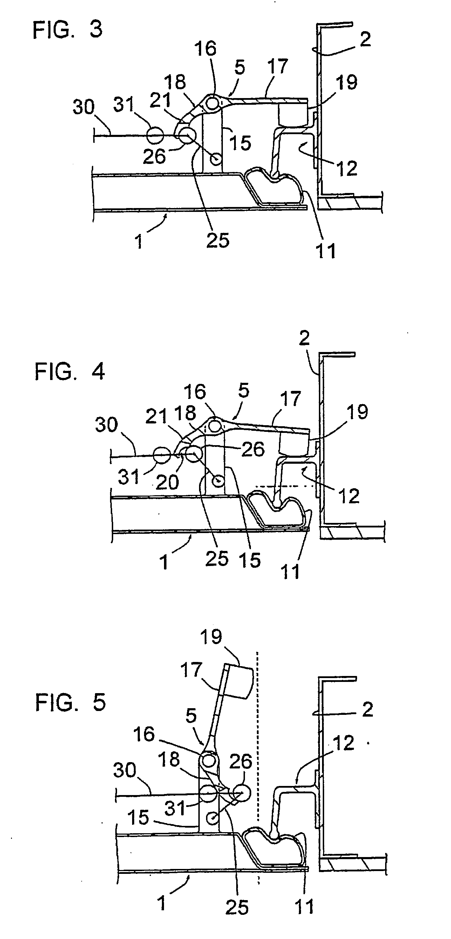

As is more particularly apparent in figures 3 to 5, the door 1 forms a rebate 10 on its periphery, which accommodates a seal 11, and the doorframe 2 includes an angle section 12. This section 12 comprises a baseplate 12a, allowing it to be fastened to the doorframe 2, a base leg 12b, one face of which forms said corresponding bearing surface with which the flap 5 cooperates, and a free leg 12c, the free edge of which includes a terminal bead around which the seal 11 is applied in the closed position of the door 1.

Each flap 5 is mounted so as to pivot, on one or more baseplates 15 fastened to the structure of the door 1, about a pin 16. It comprises a main part 17 on the side facing the outside of the door 1 and an extension 18 that extends, on the side facing the inside of the door 1, beyond the pin 16.

The main part 17 includes a bearing tag 19 on its free edge, bringing the section 12 against said corresponding bearing surface in the closed position of the door 1.

The extension 18, in the example shown, generally lies in a plane making an angle of about 135° with the plane in which said main part 17 lies. On its free edge and on its face turned toward the door 1, this extension 18 includes one or more rounded housings 20 and has, on its face turned away from the door 1, a surface 21 of convex rounded shape.

Each housing 20 is designed to closely accommodate a cam wheel 26 fastened to a corresponding link rod 25, which will be described below, and is bounded, on each side, in the plane of pivoting of the link rod 25, by pointed bosses 27. These bosses 27 form obstacles to the passage of the cam wheel 26 along them, so that they constitute cam surfaces that cooperate with the cam wheel 26, so as to cause the flap 5 to pivot, and so that they form hard points that the cam wheel 26 must negotiate in order to enter or leave the housing 20. The latter is therefore suitable for retaining the cam wheel 26 in it

The convex rounded surface 21 is intended to cooperate with a cam wheel 31, described later.

The link rod 25 is mounted so as to pivot, via one end, on the lower part of the baseplate 15 and includes the cam wheel 26 on its free end. Its length is adapted so that the cam wheel 26 cooperates with the bosses 27 so as to fulfill the aforementioned cam-surface and hard-point functions.

On the spindle of this cam wheel 26, each link rod 25 is linked to an actuating arm 30, passing through spaces made in the extension 18. Each arm 30 has a cam wheel 31 suitable for rolling over said convex rounded surface 21 of the extension 18.

Figure 3 shows the locking position of the door 1. In this position, each cam wheel 26 is engaged in its corresponding housing 20 and each flap 5 is in a position such that the strip 19 is closely applied against said corresponding bearing surface and the seal 11 is compressed around the terminal bead on the free leg 12c of the section 12. The spring-back of the seal 11 ensures retention of each cam wheel 26 in the corresponding housing 20 when the airplane is not pressurized. The pressurization, as soon as it is effective, ensures this retention as a result of the stress exerted on the door 1, which is transmitted to the flaps 5 and link rods 25.

To open the door 1, after the various safety mechanisms with which the door is equipped have been released, a thrust is exerted on each arm 30 so as to make the corresponding link rod 25 pivot clockwise in order to release the cam wheel 26 from the housing 20. The cam surface that the boss 27 forms, over which the cam wheel 26 passes, causes the flap 5 to undergo an additional clockwise pivoting movement. This pivoting movement results, as shown in figure 4, in further compression of the seal 11 and in a slight movement of the door 1 toward the interior of the airplane cabin. This slight movement is impossible in the event of full or residual pressurization in the cabin, so that the system according to the invention meets the requirement for an inward-opening movement, that is to say the impossibility of opening the door 1 if such pressurization exists.

When the translational movement of the arm 30 is continued, the cam wheel 31 bears against the convex rounded surface 21 of the extension 18 and then causes, as shown in figure 5, by cooperation between this cam wheel 31 and this surface 21, the flap 5 to pivot counterclockwise. This pivoting movement fully disengages each flap 5 and tag 19, back from the section 12, and consequently allows the door 1 to move outward from the cabin in a simple translational and pivoting movement of the door 1, or even in a pure pivoting movement.

The invention thus provides a locking system for an aircraft door, especially for an airplane passenger door, having the key advantages of being relatively simple, of allowing the door to undergo a simple movement and of properly distributing the stresses exerted during flight on the door and the doorframe.

It goes without saying that the invention is not limited to the embodiment described above by way of example, rather it extends to all embodiments covered by the claims appended hereto.

## Claims

1. An aircraft door (1) with a doorframe (2) and a locking system (5, 30,18, 25), especially an airplane passenger door, comprising:
- at least one locking member (5) mounted on the door (1) or on the doorframe (2), located along at least one of the edges of the door (1) or of the doorframe (2), this locking member (5) being able to move between a closed position, in which it bears against a corresponding bearing region of the doorframe (2) or of the door (1), a what is called "inward opening" intermediate position, which it occupies during the opening sequence of the door (1), in which it bears respectively against the doorframe (2) or the door (1) so as to move the door (1) toward the interior of the aircraft cabin, and an open position, in which it is completely disengaged from said corresponding bearing region, thus permitting the outward movement of the door (1) relative to the doorframe (2) without an upward or downward vertical movement;
- means (30) for actuating each locking member (5) between said closed and open positions; and
- means (18, 25) for locking each locking member (5) in the closed position.

2. The aircraft door (1) as claimed in claim 1, **characterized in that** each locking member (5) is able to move in a pivoting movement and **in that**, in said closed position, it is approximately parallel to the door (1) or the doorframe (2), whereas, in the open position, it is approximately perpendicular to the door (1) or to the doorframe (2).

3. The aircraft door (1) as claimed in claim 1 or claim 2, **characterized in that** the door (1) or the doorframe (2) comprises several locking members (5).

4. The aircraft door (1) as claimed in one of claims 1 to 3, **characterized in that** the door (1) or the doorframe (2) comprises locking members (5) on several of its edges, in particular on opposed edges.

5. The aircraft door (1) as claimed in one of claims 1 to 4, **characterized in that** each locking member (5) has a relatively long length so as to extend over a substantial portion of an edge of the door (1) or of the doorframe (2).

6. The aircraft door (1) as claimed in claim 5, **characterized in that** the length of each locking member (5) is slightly less than one third of the height of the longitudinal edges of the door (1) or of the doorframe (2) and **in that** each longitudinal edge of the door (1) or of the doorframe (2) comprises three successive locking members (5).

7. The aircraft door (1) as claimed in one of claims 2 to 6, **characterized in that** the means for locking each locking member (5) comprise:
- at least one extension (18) of each locking member (5) beyond the pivot axis of this locking member (5), on the opposite side to the part (17) of the locking member (5) which is intended to cooperate with said corresponding bearing region; and
- at least one latch (25) that can move between a locking position, in which it is engaged between this extension (18) and a region of the door (1) or of the doorframe (2), and an unlocking position, in which it is set back, beyond said extension (18), thus permitting the movement of the locking member (5).

8. The aircraft door (1) as claimed in one of claims 2 to 6, **characterized in that** at least one pivoting locking member and the means for actuating this locking member comprise means (26, 30) suitable for making each locking member (5) pivot beyond the closed position of this locking member (5), this pivoting movement bringing each locking member (5) into said inward-opening intermediate position.

9. The aircraft door (1) as claimed in claim 7 and claim 8, **characterized in that**:
- each latch comprises a link rod (25) mounted so as to pivot on the door (1) or the doorframe (2) and that, when in the locking position, bears against said extension (18); and
- at least one cam surface provided on said extension (18), shaped so as to allow said additional pivoting to be performed when the link rod (25) moves along said cam surface.

10. The aircraft door (1) as claimed in one of claims 7 to 9, **characterized in that** it includes an actuating arm (30) connected to said latch (25), allowing it to be actuated between said locking and unlocking positions, which arm, after having moved the latch (25) toward its unlocking position, bears against said extension (18) of the locking member (5) and allows said locking member to move toward its open position.

11. The aircraft door (1) as claimed in one of claims 1 to 10, **characterized in that** the doorframe (2) of the door (1) includes at least one angle section (12), the base leg of which forms said corresponding bearing surface and the free leg of which forms a rim around which a seal (11), which this door (1) has, deforms when the door (1) is in the closed position.

## Patentansprüche

1. Luftfahrzeugtür (1) mit einem Türrahmen (2) und einem Schließsystem (5, 30, 18, 25), insbesondere eine Flugzeugpassagiertür, umfassend:
- mindestens ein Schließelement (5), das an der Tür (1) oder an dem Türrahmen (2) angebracht ist und sich an mindestens einem der Ränder der Tür (1) oder des Türrahmens (2) entlang befindet, wobei sich dieses Schließelement (5) zwischen einer geschlossenen Position, in der es sich auf einen entsprechenden Abstützbereich des Türrahmens (2) oder der Tür (1) abstützt, einer so genannte "nach innen öffnenden" Zwischenposition, die es während des Öffnungsablaufs der Tür (1) einnimmt, bei dem es sich jeweils an dem Türrahmen (2) oder der Tür (1) abstützt, um die Tür (1) zum Innern der Luftfahrzeugkabine zu bewegen, und einer offenen Position, in der es vollständig von dem entsprechenden Abstützbereich befreit ist, bewegen kann, wodurch die Bewegung der Tür (1) im Verhältnis zum Türrahmen (2) nach außen ohne eine senkrechte Bewegung nach oben oder nach unten ermöglicht wird;
- Mittel (30) zum Betätigen jedes Schließelements (5) zwischen den geschlossenen und offenen Positionen; und
- Mittel (18, 25) zum Schließen jedes Schließelements (5) in der geschlossenen Position.

2. Luftfahrzeugtür (1) nach Anspruch 1, **dadurch gekennzeichnet, dass** jedes Schließelement (5) in der Lage ist, sich in einer Schwenkbewegung zu bewegen, und dass es in der geschlossenen Position zu der Tür (1) oder zu dem Türrahmen (2) annähernd parallel ist, während es in der offenen Position zu der Tür (1) oder zu dem Türrahmen (2) annähernd rechtwinklig ist.

3. Luftfahrzeugtür (1) nach Anspruch 1 oder Anspruch 2, **dadurch gekennzeichnet, dass** die Tür (1) oder der Türrahmen (2) mehrere Schließelemente (5) umfasst.

4. Luftfahrzeugtür (1) nach einem der Ansprüche 1 bis 3, **dadurch gekennzeichnet, dass** die Tür (1) oder der Türrahmen (2) Schließelemente (5) auf mehreren ihrer bzw. seiner Ränder umfasst, insbesondere auf gegenüberliegenden Rändern.

5. Luftfahrzeugtür (1) nach einem der Ansprüche 1 bis 4, **dadurch gekennzeichnet, dass** jedes Schließelement (5) relativ lang ist, um sich über einen wesentlichen Abschnitt eines Randes der Tür (1) oder des Türrahmens (2) zu erstrecken.

6. Luftfahrzeugtür (1) nach Anspruch 5, **dadurch gekennzeichnet, dass** die Länge jedes Schließelements (5) geringfügig kleiner ist als ein Drittel der Höhe der Längsränder der Tür (1) oder des Türrahmens (2), und dass jeder Längsrand der Tür (1) oder des Türrahmens (2) drei aufeinanderfolgende Schließelemente (5) umfasst.

7. Luftfahrzeugtür (1) nach einem der Ansprüche 2 bis 6, **dadurch gekennzeichnet, dass** die Mittel zum Schließen jedes Schließelements (5) folgendes umfassen:
- mindestens eine Verlängerung (18) jedes Schließelements (5) über die Schwenkachse dieses Schließelements (5) hinaus, auf der Seite, die dem Teil (17) des Schließelements (5) gegenüberliegt, das dazu gedacht ist, mit dem entsprechenden Abstützbereich zusammenzuwirken; und
- mindestens eine Klinke (25), die sich zwischen einer Verriegelungsposition, in der sie zwischen dieser Verlängerung (18) und einem Bereich der Tür (1) oder des Türrahmens (2) in Eingriff steht, und einer Entriegelungsposition, in der sie über die Verlängerung (18) hinaus zurück gesetzt ist, wodurch die Bewegung des Schließelements (5) ermöglicht wird.

8. Luftfahrzeugtür (1) nach einem der Ansprüche 2 bis 6, **dadurch gekennzeichnet, dass** mindestens ein schwenkbares Schließelement und die Mittel zum Betätigen dieses Schließelements Mittel (26, 30) umfassen, die dazu geeignet sind, um jedes Schließelement (5) über die geschlossene Position dieses Schließelements (5) hinaus zu verschwenken, wobei diese Schwenkbewegung jedes Schließelement (5) in die nach innen öffnende Zwischenposition bringt.

9. Luftfahrzeugtür (1) nach Anspruch 7 und Anspruch 8, **dadurch gekennzeichnet, dass**:
- jede Klinke eine Verbindungsstange (25) umfasst, die derart angebracht ist, dass sie sich auf der Tür (1) oder dem Türrahmen (2) dreht, und dass sie sich, wenn sie sich in der Verriegelungsposition befindet, an der Verlängerung (18) abstützt; und
- mindestens eine Nockenfläche, die auf der Verlängerung (18) bereitgestellt wird, die derart gestaltet ist, dass sie das Ausführen des zusätzlichen Schwenkens ermöglicht, wenn die Verbindungsstange (25) sich an dieser Nockenfläche entlang bewegt.

10. Luftfahrzeugtür (1) nach einem der Ansprüche 7 bis 9, **dadurch gekennzeichnet, dass** sie einen Betätigungsarm (30) umfasst, der mit der Klinke (25) verbunden ist, wodurch sie zwischen den Verriegelungs- und Entriegelungspositionen bewegt werden kann, wobei sich der Arm, nachdem er die Klinke (25) in die Entriegelungsposition bewegt hat, an der Verlängerung (18) des Schließelements (5) abstützt und es dem Schließelement ermöglicht, sich in seine offene Position zu bewegen.

11. Luftfahrzeugtür (1) nach einem der Ansprüche 1 bis 10, **dadurch gekennzeichnet, dass** der Türrahmen (2) der Tür (1) mindestens einen Winkelabschnitt (12) umfasst, dessen Basisschenkel die entsprechende Abstützfläche bildet und dessen freier Schenkel eine Krempe bildet, um die herum sich eine Dichtung (11), über welche diese Tür (1) verfügt, verformt, wenn die Tür (1) sich in der geschlossenen Position befindet.

## Revendications

1. Porte (1) d'aéronef avec un encadrement (2) et un système de verrouillage (5, 30, 18, 25), notamment pour porte passagers d'avion comprenant:
- au moins un organe de verrouillage (5) monté sur la porte (1) ou sur l'encadrement (2), situé le long d'au moins un des bords de la porte (1) ou de l'encadrement (2), cet organe de verrouillage (5) étant mobile entre une position de fermeture, dans laquelle il vient en appui contre une zone d'appui correspondante de l'encadrement (2) ou de la porte (1), une position intermédiaire dite d"'inward opening", qu'il vient occuper lors de la séquence d'ouverture de la porte (1), dans laquelle il prend appui respectivement contre l'encadrement (2) ou la porte (1) de manière à déplacer la porte (1) vers l'intérieur de la cabine de l'aéronef, et une position d'ouverture, dans laquelle il se trouve complètement dégagé de ladite zone d'appui correspondante, autorisant ainsi le mouvement de la porte (1) par rapport à l'encadrement (2), vers l'extérieur, sans mouvement vertical vers le haut ou vers le bas ;
- des moyens (30) d'actionnement de chaque organe de verrouillage (5) entre lesdites positions de fermeture et d'ouverture, et
- des moyens (18, 25) de verrouillage de chaque organe de verrouillage (5) en position de fermeture.

2. Porte (1) d'aéronef selon la revendication 1, **caractérisé en ce que** chaque organe de verrouillage (5) est mobile selon un mouvement de pivotement et **en ce que**, dans ladite position de fermeture, il se trouve sensiblement parallèle à la porte (1) ou à l'encadrement (2) tandis que, dans la position d'ouverture, il se trouve sensiblement perpendiculaire à la porte (1) ou à l'encadrement (2).

3. Porte (1) d'aéronef selon la revendication 1 ou la revendication 2, **caractérisé en ce que** la porte (1) ou l'encadrement (2) comprend plusieurs organes de verrouillage (5).

4. Porte (1) d'aéronef selon l'une des revendications 1 à 3, **caractérisé en ce que** la porte (1) ou l'encadrement (2) comprend des organes de verrouillage (5) sur plusieurs de ses bords, en particulier sur des bords opposés.

5. Porte (1) d'aéronef selon l'une des revendications 1 à 4, **caractérisé en ce que** chaque organe de verrouillage (5) présente une longueur relativement importante, de manière à s'étendre sur une portion substantielle d'un bord de la porte (1) ou de l'encadrement (2).

6. Porte (1) d'aéronef selon la revendication 5, **caractérisé en ce que** la longueur de chaque organe de verrouillage (5) est légèrement inférieure au tiers de la hauteur des bords longitudinaux de la porte (1) ou de l'encadrement (2), et **en ce que** chaque bord longitudinal de la porte (1) ou de l'encadrement (2) comprend trois organes de verrouillage (5) successifs.

7. Porte (1) d'aéronef selon l'une des revendications 2 à 6, **caractérisé en ce que** les moyens de verrouillage de chaque organe de verrouillage (5) comprennent :
- au moins une extension (18) de chaque organe de verrouillage (5) au-delà de l'axe de pivotement de cet organe de verrouillage (5), du côté opposé à la partie (17) de l'organe de verrouillage (5) destinée à venir coopérer avec ladite zone d'appui correspondante ;
- au moins un verrou (25) mobile entre une position de verrouillage, dans laquelle il vient s'engager entre cette extension (18) et une zone de la porte (1) ou de l'encadrement (2), et une position de déverrouillage, dans laquelle il est effacé au-delà de ladite extension (18), autorisant ainsi le mouvement de l'organe de verrouillage (5).

8. Porte (1) d'aéronef selon l'une des revendications 2 à 6, **caractérisé en ce qu'**au moins un organe de verrouillage pivotant et les moyens d'actionnement de cet organe de verrouillage comprennent des moyens (26, 30) propres à réaliser un pivotement de chaque organe de verrouillage (5) au-delà de la position de fermeture de cet organe de verrouillage (5), ce pivotement amenant chaque organe de verrouillage (5) dans ladite position intermédiaire d"'inward opening".

9. Porte (1) d'aéronef selon la revendication 7 et la revendication 8, **caractérisé en ce que** :
- chaque verrou comprend une biellette (25) montée pivotante sur la porte (1) ou l'encadrement (2) et venant, en position de verrouillage, prendre appui contre ladite extension (18) ; et
- au moins une surface de came aménagée sur ladite extension (18), conformée pour permettre la réalisation dudit pivotement supplémentaire lorsque la biellette (25) se déplace le long d'elle.

10. Porte (1) d'aéronef selon l'une des revendications 7 à 9, **caractérisé en ce qu'**il comprend un bras d'actionnement (30) relié audit verrou (25), dont il permet l'actionnement entre lesdites positions de verrouillage de déverrouillage, et qui, après avoir déplacé le verrou (25) vers la position de déverrouillage de celui-ci, vient porter contre ladite extension (18) de l'organe de verrouillage (5) et permet le mouvement dudit organe de verrouillage vers sa position d'ouverture.

11. Porte (1) d'aéronef selon l'une des revendications 1 à 10, **caractérisé en ce que** l'encadrement (2) de la porte (1) comprend au moins une section angulaire (12) en forme de cornière, dont la branche de base forme ladite surface d'appui correspondante et dont la branche libre forme un rebord sur lequel vient, en position de fermeture de la porte (1), se déformer un joint d'étanchéité (11) que comprend cette porte (1).
